# EUROPÄISCHE PATENTANMELDUNG

(11) **EP 0 924 236 A1**
(43) Veröffentlichungstag der Anmeldung: **23.06.1999**
(21) Anmeldenummer: 98118553.1
(22) Anmeldetag: 01.10.1998
(51) Int. Cl.: C08G 77/08

(54) **Verfahren zur Veränderung der Viskosität von Organopolysiloxanen**

(30) Priorität: 19.12.1997 DE 19756832
(71) Anmelder: Wacker-Chemie GmbH, 81737 München (DE)
(72) Erfinder: Schneider, Otto Dr., 84489 Burghausen (DE); Kratschmera, Ralf, 84508 Burgkirchen (DE)
(74) Vertreter: Fritz, Helmut, Dr.

(57) **Zusammenfassung**

Gegenstand der Erfindung ist ein Verfahren zur Veränderung der Viskosität von Organopolysiloxanen, bei dem als Katalysator Ton eingesetzt wird, welcher mit Mineralsäure behandelt und anschließend auf 250 bis 1200°C erhitzt worden ist. Bei dem Verfahren werden wenig flüchtige Siloxane, insbesondere wenig Cyclen, hergestellt.

## Beschreibung

Die Erfindung betrifft ein Verfahren zur Veränderung der Viskosität von Organopolysiloxanen mit aktiviertem Ton, bei dem wenig flüchtige Siloxane, insbesondere wenig Cyclen, hergestellt werden.

Verfahren zur Veränderung der Viskosität von Organopolysiloxanen sind bereits bekannt. Die dazu erforderlichen Kondensations- und Äquilibrierungsreaktionen verlaufen häufig gleichzeitig.

Phosphornitridhalogenide werden häufig als homogene Katalysatoren eingesetzt, wenn die Bildung von Cyclen unerwünscht ist. Jedoch können diese Katalysatoren nicht mit physikalischen Methoden aus dem Produkt entfernt werden. Sie werden neutralisiert, die Neutralisationsprodukte verbleiben im Produkt.

Heterogene Katalysatoren weisen den Vorteil auf, daß sie leicht von den gebildeten Organopolysiloxanen abgetrennt werden können. In DE-A-44 41 057 wird beispielsweise säureaktivierte Bleicherde in heterogener Mischung als Katalysator zur kontinuierlichen Herstellung von Organopolysiloxanen durch Kondensation- und/oder Äquilibrierungsreaktion eingesetzt. In US-A-4,792,596 wird dazu säureaktivierter Montmorillonit in Form von Festbettkatalysator verwendet, wobei hier der Katalysator nicht durch besondere Prozeßschritte, wie Filtration, abgetrennt werden muß.

In beiden Verfahren werden aber hohe Anteile von etwa 10 bis 16 % flüchtiger Siloxane, insbesondere Cyclen, gebildet.

Der vorliegenden Erfindung liegt die Aufgabe zugrunde, ein heterogen katalysiertes Verfahren zur Veränderung der Viskosität von Organopolysiloxanen bereitzustellen, bei dem wenig flüchtige Siloxane/Cyclen anfallen.

Gegenstand der Erfindung ist ein Verfahren zur Veränderung der Viskosität von Organopolysiloxanen, bei dem als Katalysator Ton eingesetzt wird, welcher mit Mineralsäure behandelt und anschließend auf 250 bis 1200°C erhitzt worden ist.

Der Anteil an flüchtigen Siloxanen, insbesondere Cyclen, im Produkt ist wesentlich geringer als bei üblichen heterogenen Katalysatoren, insbesondere wenn diese nicht erhitzt worden sind. Dadurch wird die Ausbeute an linearen Organopolysiloxanen erhöht. Ferner müssen nicht so große Mengen an flüchtigen Cyclen aus dem Produkt abgetrennt und in das Verfahren zurückgeführt werden. Dies führt zu vermindertem Aufwand und zu besserer Raum-Zeit-Ausbeute der Anlagen.

Die als Katalysator einsetzbaren Tone sind Schichtsilicate als Verwitterungsprodukte Aluminiumoxid-haltiger Gesteine. Sie bestehen hauptsächlich aus Al₂O₃, SiO₂ und H₂O und teilweise geringeren Anteile an Fe^{III}, Ca, Mg, Na und K. Beispiele für geeignete Tone sind Kaolin, wie Kaolinit, Allophan und Haloysit; Illite, wie Glaukonit; Smektite, wie Montmorillonit, Bentonit, Nontronit und Beidellit; Chlorite und Vermiculite.

Die Tone werden mit Mineralsäure, insbesondere Salzsäure oder Schwefelsäure oder auch Phosphorsäure behandelt, üblicherweise bei 80 bis 170°C. Derartige säurebehandelte Tone werden beispielsweise unter der Bezeichnung Tonsil® (Süd-Chemie AG, München) und Filtrol® von Engelhard (USA) vertrieben.

Im Anschluß werden die säureaktivierten Tone auf 250 bis 1200°C, vorzugsweise mindestens 350°C, insbesondere mindestens 450°C erhitzt.
Das Erhitzen kann in Anwesenheit oder Abwesenheit von Sauerstoff erfolgen
Das Erhitzen kann in reinem Sauerstoff oder in mit Inertgas verdünntem Sauerstoff, wie Luft erfolgen, wobei vorzugsweise mindestens 10 Vol.-% Sauerstoff anwesend sind.

Das Erhitzen dauert vorzugsweise mindestens 10 Minuten, insbesondere mindestens 50 Minuten. Der Druck beträgt vorzugsweise mindestens 100 hPa.

Vorzugsweise werden die Tone als Katalysatoren zur Veränderung der Viskosität von Organopolysiloxanen in Mengen von 0,01 bis 15 Gew.-%, vorzugsweise mindestens 0,03, insbesondere mindestens 0,1 Gew.-% und vorzugsweise höchstens 8, insbesondere höchstens 5 Gew.-%, jeweils bezogen auf das Gewicht der eingesetzten Organopolysiloxane, verwendet.

Im Verfahren kann frisch hergestellter, gelagerter oder bereits mehrfach gebrauchter Katalysator eingesetzt werden.

Die Veränderung der Viskosität von Organopolysiloxanen geschieht durch Kondensations- und Äquilibrierungsreaktionen. Kondensationsreaktionen von Organosiliciumverbindungen sind insbesondere die Reaktionen von zwei Si-gebundenen Hydroxylgruppen unter Austritt von Wasser, ferner beispielsweise die Reaktion einer Si-gebundenen Hydroxylgruppe mit einer Si-gebundenen Alkoxygruppe unter Austritt von Alkohol oder mit Si-gebundenem Halogen unter Austritt von Halogenwasserstoff. Unter Äquilibrierungsreaktionen werden die Umlagerungen von Siloxanbindungen von Siloxaneinheiten verstanden.

Die Viskosität von Organopolysiloxanen kann erniedrigt oder vorzugsweise erhöht werden. Alle Organopolysiloxane können hergestellt werden, die bisher mit festen Katalysatoren durch Kondensations- und Äquilibrierungsreaktionen hergestellt worden sind.

Unter dem Begriff Organopolysiloxane sollen auch oligomere und dimere Siloxane verstanden werden.

Bei den eingesetzten Organopolysiloxanen handelt es sich vorzugsweise um lineare oder im wesentlichen lineare Diorganopolysiloxane mit Si-gebundenen Hydroxylgruppen und/oder durch Triorganosiloxygruppen endblockierte Diorganopolysiloxane, gegebenenfalls im Gemisch mit cyclischen Diorganopolysiloxanen.
Die im wesentlichen linearen Diorganopolysiloxane enthalten mindestens 80 Mol-%, bevorzugt 90 Mol-% insbesondere 95 Mol-% R₂SiO Einheiten, wobei **R** die nachstehenden Bedeutungen aufweist.

Ferner können auch Organopolysiloxane, in denen beispielsweise bis zu 20 Mol-%, insbesondere bis zu 10 Mol-% der Diorganosiloxaneinheiten durch andere Siloxaneinheiten, wie RSiO_{3/2}- und/oder SiO_{4/2}-Einheiten, ersetzt sind, verwendet werden, wobei **R** die nachstehenden Bedeutungen aufweist.

Organopolysiloxane, die bei dem Verfahren eingesetzt werden können, sind allgemein bekannt und werden häufig durch die allgemeinen Formeln

X(SiR₂O)ₙSiR₂X (I),

(SiR₂O)ₘ (II)

und

R₃SiOSiR₃ (III)

wiedergegeben, wobei
- **R**: einen einwertigen, gegebenenfalls mit Halogen- oder Cyangruppen substituierten Kohlenwasserstoffrest,
- **X**: eine Hydroxylgruppe, Alkoxygruppe, Chlor oder die Gruppe -OSiR₃, wobei **R** die vorstehend dafür angegebene Bedeutung hat,
- **n**: 0 oder eine ganze Zahl von 1 bis 200, bevorzugt 0 oder eine durchschnittliche Zahl von 1 bis 150, und
- **m**: eine ganze Zahl im Wert von 3 bis 60, bevorzugt 3 bis 20, bedeuten.

Obwohl durch die häufig verwendeten Formeln nicht dargestellt, können beispielsweise bis zu 20 Molprozent, insbesondere bis zu 10 Molprozent der Diorganosiloxaneinheiten durch andere Siloxaneinheiten, wie RSiO_{3/2}- und/oder SiO_{4/2}-Einheiten, ersetzt sein, wobei **R** die vorstehend dafür angegebene Bedeutung hat.

Bevorzugt handelt es sich bei Rest **R** um Kohlenwasserstoffreste mit 1 bis 18 Kohlenstoffatomen, wobei Kohlenwasserstoffreste mit 1 bis 4 Kohlenstoffatomen, insbesondere der Methylrest, besonders bevorzugt sind.

Beispiele für einwertige Kohlenwasserstoffreste **R** sind Alkylreste, wie der Methyl-, Ethyl-, n-Propyl-, iso-Propyl-, n-Butyl- und sec.-Butylrest, Alkenylreste, wie der Vinyl- und der Allylrest, und Arylreste, wie der Phenyl- und der Naphthylrest.

Beispiele für einwertige, substituierte Kohlenwasserstoffreste **R** sind Cyanalkylreste, wie der β-Cyanethylrest, Halogenalkylreste, wie der 3,3,3-Trifluorpropylrest, und Halogenarylreste, wie o-, m- und p-Chlorphenylreste.

Bei dem Verfahren werden als Organopolysiloxane der allgemeinen Formel (I) besonders bevorzugt solche mit **X** gleich Hydroxylgruppe eingesetzt.

Die Viskosität der Organopolysiloxane der allgemeinen Formel (I) beträgt z. B. 5 bis 1000 mm²/s, vorzugsweise 10 bis 250 mm²/s, besonders bevorzugt 20 bis 150 mm²/s, jeweils bei einer Temperatur von 25°C.

Beispiele für Verbindungen der allgemeinen Formel (I) sind α,ω -Dihydroxydimethylpolysiloxan mit einer Viskosität von 60 mm²/s bei 25 °C, α,ω-Dihydroxydimethylpolysiloxan mit einer Viskosität von 110 mm²/s bei 25 °C und α,ω-Bis(trimethylsiloxy)polydimethylsiloxan mit einer Viskosität von 35 mm²/s bei 25 °C.

Beispiele für Verbindungen der allgemeinen Formel (II) sind Hexamethylcyclotrisiloxan, Octamethylcyclotetrasiloxan und Decamethylcyclopentasiloxan.

Beispiele für Verbindungen der allgemeinen Formel (III) sind Hexamethyldisiloxan und 1,3-Divinyl-1,1,3,3-tetramethyldisiloxan.

Bei den Verbindungen der allgemeinen Formel (I) mit **X** gleich -OSiR₃, wobei **R** die obengenannte Bedeutung hat, und bei Disiloxanen der allgemeinen Formel (III) handelt es sich um Organopolysiloxane, welche die Kettenlänge regeln.

Die Menge an eingesetzter, die Kettenlänge regelnder Organopolysiloxane richtet sich nach der gewünschten Höhe des Molekulargewichts der durch Kondensation und/oder Äquilibrierung hergestellten Organopolysiloxane.

Bei den im Verfahren eingesetzten Organopolysiloxanen kann es sich jeweils um eine Art vorstehend beschriebener Organopolysiloxane wie auch um ein Gemisch verschiedener Organopolysiloxane handeln.

Bei dem Verfahren wird als Organopolysiloxan vorzugsweise ein Gemisch aus Organopolysiloxanen der allgemeinen Formel (I) mit **X** gleich Hydroxylgruppe und Cyclosiloxanen der allgemeinen Formel (II) sowie ein Gemisch aus Organopolysiloxanen der allgemeinen Formel (I) mit **X** gleich der Gruppe -OSiR₃ mit **R** gleich der vorstehenden Bedeutung und Disiloxan der allgemeinen Formel (III) eingesetzt.

Die obigen Ausführungen im Zusammenhang mit der Bedeutung von **R** bzw. **X** gelten in vollem Umfang auch für die SiC-gebundenen organischen Reste bzw. für die Si-gebundenen Reste der anderen Organopolysiloxane.

Bei dem Verfahren können des weiteren noch übliche Zusatzstoffe, wie Lösungsmittel, Filterhilfsmittel und Additive, eingesetzt werden.

Bei dem Verfahren können Organopolysiloxane, feinteiliger Katalysator und gegebenenfalls Zusatzstoffe getrennt voneinander in den verwendeten Reaktor eingeführt werden. Vorzugsweise wird jedoch eine pumpfähige Mischung aus Organopolysiloxanen, Katalysator und gegebenenfalls Zusatzstoffen in den verwendeten Reaktor eingeführt. Die Herstellung dieser pumpfähigen Mischung erfolgt vorzugsweise dadurch, daß die Edukte in einem Gefäß gegebenenfalls unter Erwärmen miteinander vermischt werden.

Die durchschnittliche Teilchengröße des in heterogener Mischung suspendiert eingesetzten Katalysators beträgt vorzugsweise 0,5 bis 1000 µm, insbesondere 2 bis 200 µm.

Für die Durchführung des Verfahrens zur Veränderung der Viskosität von Organopolysiloxanen in einem Festbett kann der Katalysator durch bekannte Verfahren in Granulat- oder Stückform gebracht werden. Das Festbettverfahren kann in bekannten, dafür geeigneten Vorrichtungen durchgeführt werden.

Das Verfahren zur Veränderung der Viskosität von Organopolysiloxanen kann bei den üblichen Temperaturen, Drücken und in den üblichen Zeiten wie bei den bisher bekannten Verfahren zur Herstellung von Organopolysiloxanen mit Tonkatalysatoren durchgeführt werden.

Die Temperaturen betragen vorzugsweise 50 bis 200°C, insbesondere mindestens 60°C, besonders bevorzugt mindestens 80°C und insbesondere höchstens 180°C, besonders bevorzugt höchstens 160°C.

Die angewendeten Drücke sind vorzugsweise 0,1 bis 10000 hPa, insbesondere mindestens 1, besonders bevorzugt mindestens 10 hPa und insbesondere höchstens 5000, besonders bevorzugt höchstens 1100 hPa. Beispielsweise ist es beim Einsatz nichtflüchtiger Ausgangsstoffe, wie etwa linearen Organopolysiloxanen mit endständigen Hydroxylgruppen und/oder Triorganosilylgruppen, vorteilhaft, das Verfahren bei niedrigen Drücken, wie etwa 0,1 bis 100 hPa, durchzuführen, wobei flüchtige Bestandteile, wie Wasser, effektiv entfernt werden können. Beim Einsatz großer Mengen flüchtiger Ausgangsstoffe, wie cyclischen Siloxanen oder Disiloxanen, ist es hingegen von Vorteil, das Verfahren beim Druck der umgebenden Atmosphäre, also etwa 900 bis 1100 hPa, durchzuführen.

Nach dem Verfahren werden Organopolysiloxane hergestellt, die eine Viskosität von vorzugsweise 1 bis 100 000 mm²/s, insbesondere mindestens 5, und insbesondere höchstens 50 000 mm²/s bei 25°C aufweisen. Typischerweise werden aus niederviskosen Organopolysiloxanen höherviskose Organopolysiloxane, insbesondere Öle hergestellt. Das Verfahren ist auch sehr gut geeignet zur Herstellung von niederviskosen Organopolysiloxanen aus höherviskosen Organopolysiloxanen, beispielsweise zur Gewinnung niederviskoser, leicht zu reinigender Öle aus verunreinigten, gebrauchten Organopolysiloxanen.

In den nachstehend beschriebenen Beispielen beziehen sich alle Angaben von Teilen, Prozentsätzen und ppm, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt. Die Viskositätsangaben beziehen sich auf eine Temperatur von 25°C.

### Beispiel K1 - K9: Katalysatorherstellung

Ca. 100 g Tonsil® säureaktivierter Ton (Süd-Chemie AG, München) der angegebenen Type werden ca. 2 h in Luft bei der angegebenen Temperatur erhitzt. Die Tone sind zuvor mit den nachstehend aufgeführten Säuren behandelt worden.

| **Beispiel** | **Tonsil**®**-Type** | **Säure** | **Temperatur (°C)** | **Schwefel-Gehalt (mg/kg)** |
|---|---|---|---|---|
| K1* | Optimum 210 FF | HCI | 110 | 220 |
| K2 | Optimum 210 FF | HCI | 250 | - |
| K3 | Optimum 210 FF | HCI | 400 | - |
| K4 | Optimum 210 FF | HCI | 550 | 95 |
| K5 | Optimum 210 FF | HCI | 1100 | 65 |
| K6* | L 80 S | HCI | 110 | - |
| K7 | L 80 S | HCI | 550 | - |
| K8* | KSF/O | H₂SO₄ | 110 | - |
| K9 | KSF/O | H₂SO₄ | 550 | - |

| | | | | |
|---|---|---|---|---|
| * Nicht erfindungsgemäße Katalysatorvorbehandlung | | | | |

### Beispiele B1-B9: Anwendungsbeispiele für Katalysatoren K1-K9

In einen 500 ml-Dreihalskolben mit Rührer werden eingewogen 200g Polydimethylsiloxan, OH-endständig (70 mm²/s bei 25°C)
8 g Hexamethyldisiloxan
6 g Katalysator
auf ca. 100°C unter Rühren aufgeheizt und 15 Min. bei 100°C gehalten, und anschließend wird bei einem Druck von ca. 15 hPa innerhalb von 15 Min. das entstandene Reaktionswasser abgezogen. Danach wird der Katalysator durch Filtration entfernt und das Siloxangemisch wird bei ca. 120°C / 15 Min. /<1 hPa von flüchtigen Bestandteilen (überwiegend Cyclen) befreit.
Das erhaltene Öl hat eine Viskosität von ca. 100 mm²/s und ist hinsichtlich seiner physikalischen und chemischen Eigenschaften ein typisches Polydimethylsiloxan mit (CH₃)₃Si-Endgruppen.

| **Beispiel** | **Katalysator** | **Filtrierzeit (sec)** | **Cyclenanteil (%)** | **Si-OH-Geh. (Fl.ppm)** | **Viskosität nach Ausheizen (mm**^{**2**}**/s)** |
|---|---|---|---|---|---|
| B1* | K1 | 300 | 15,3 | <30 | 104 |
| B2 | K2 | - | 9,9 | <30 | 95 |
| B3 | K3 | - | 5,8 | <30 | 99 |
| B4 | K4 | - | 2,7 | <30 | 104 |
| B5 | K5 | 140 | 2,8 | <30 | 109 |
| B6* | K6 | 1200 | 15,8 | <30 | 107 |
| B7 | K7 | 900 | 6,3 | <30 | 98 |
| B8* | K8 | - | 16,1 | <30 | 106 |
| B9 | K9 | - | 4,9 | 48 | 138 |

| | | | | | |
|---|---|---|---|---|---|
| * nicht erfindungsgemäße Vergleichsbeispiele | | | | | |

## Patentansprüche

1. Verfahren zur Veränderung der Viskosität von Organopolysiloxanen, bei dem als Katalysator Ton eingesetzt wird, welcher mit Mineralsäure behandelt und anschließend auf 250 bis 1200°C erhitzt worden ist.

2. Verfahren nach Anspruch 1, wobei die Erhitzung des Tons in Anwesenheit von Sauerstoff erfolgt.

3. Verfahren nach Anspruch 1 oder 2, bei dem der Ton mit Salzsäure oder Schwefelsäure behandelt worden ist.

4. Verfahren nach Anspruch 1 bis 3, bei dem der Ton auf mindestens 350°C erhitzt worden ist.

5. Verfahren nach Anspruch 1 bis 4, bei dem der Ton in Mengen von 0,01 bis 15 Gew.-%, jeweils bezogen auf das Gewicht der eingesetzten Organopolysiloxane, verwendet wird.

6. Verfahren nach Anspruch 1 bis 5, bei dem die Temperatur bei der Veränderung der Viskosität der Organopolysiloxane 50 bis 200°C beträgt.

7. Verfahren nach Anspruch 1 bis 6, bei dem Organopolysiloxane hergestellt werden, die eine Viskosität von vorzugsweise 1 bis 100 000 mm²/s aufweisen.
